# EUROPEAN PATENT APPLICATION

(11) **EP 4 765 963 A1**
(43) Date of publication of application: **24.06.2026**
(21) Application number: 24887397.8
(22) Date of filing: 17.06.2024
(51) Int. Cl.: H04W 52/02

(54) **INFORMATION SENDING METHOD, INFORMATION RECEIVING METHOD, COMMUNICATION NODE AND STORAGE MEDIUM**

(30) Priority: 08.11.2023 CN 202311484970
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); GUO, Qiujin, Shenzhen, Guangdong 518057 (CN); HU, Youjun, Shenzhen, Guangdong 518057 (CN); CHEN, Mengzhu, Shenzhen, Guangdong 518057 (CN)
(74) Representative: Aipex B.V.
(86) International application number: PCT/CN2024/099599
(87) International publication number: WO 2025/097773

(57) **Abstract**

Provided are an information sending method, an information receiving method, a communication node, and a storage medium. The information sending method includes determining first information and second information; and preprocessing the first information and sending the preprocessed first information through a waveform based on a first modulation, where the second information is carried on symbols corresponding to the first modulation.

## Description

### TECHNICAL FIELD

The present application relates to the field of wireless communication technology, for example, an information sending method, an information receiving method, a communication node, and a storage medium.

### BACKGROUND

To satisfy battery life requirements, a user equipment (UE) may use a separate receiver module to receive a low-power wake-up signal and activate a main receiver in response to the wake-up signal to perform data transmission. When the UE detects no low-power wake-up signal, the main receiver is in a deep sleep state, thereby reducing power consumption of the terminal. During a low-power wake-up process, it is required to transmit information such as wake-up information and verification information; however, there is currently no effective solution for how such information is transmitted.

### SUMMARY

The present application provides an information sending method, an information receiving method, a communication node, and a storage medium.

Embodiments of the present application provide an information sending method. The information sending method includes determining first information and second information; and preprocessing the first information and sending the preprocessed first information through a waveform based on a first modulation, where the second information is carried on symbols corresponding to the first modulation.

Embodiments of the present application also provide an information receiving method. The information receiving method includes receiving first information and second information, where a waveform corresponding to the first information is a waveform based on a first modulation, and the second information is carried on symbols corresponding to the first modulation; and determining, according to the first information and the second information, whether to perform data transmission.

Embodiments of the present application also provide a communication node. The transmission node includes a memory, a processor, and a computer program stored in the memory and executable on the processor. When executing the program, the processor performs the information sending method or the information receiving method.

Embodiments of the present application also provide a computer-readable storage medium storing a computer program which, when executed by a processor, causes the processor to perform the information sending method or the information receiving method.

### BRIEF DESCRIPTION OF DRAWINGS

FIG. 1 is a flowchart of an information sending method according to an embodiment.
FIG. 2 is a flowchart of an information receiving method according to an embodiment.
FIG. 3 is a diagram illustrating that second information is carried on symbols corresponding to a first modulation according to an embodiment.
FIG. 4 is a diagram illustrating that second information is carried on symbols corresponding to a first modulation according to an embodiment.
FIG. 5 is a diagram illustrating that second information is carried on symbols corresponding to a first modulation according to an embodiment.
FIG. 6 is a diagram illustrating that second information is carried on symbols corresponding to a first modulation according to an embodiment.
FIG. 7 is a diagram illustrating that second information is carried on symbols corresponding to a first modulation according to an embodiment.
FIG. 8 is a diagram illustrating that second information is carried on symbols corresponding to a first modulation according to an embodiment.
FIG. 9 is a diagram illustrating the structure of an information sending apparatus according to an embodiment.
FIG. 10 is a diagram illustrating the structure of an information receiving apparatus according to an embodiment.
FIG. 11 is a diagram illustrating a hardware structure of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

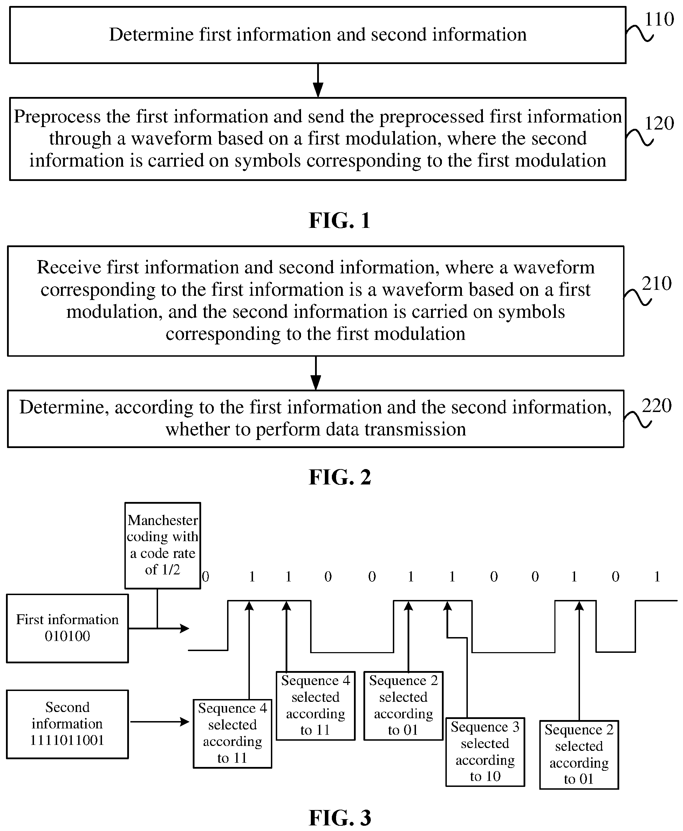

FIG. 1 is a flowchart of an information sending method according to an embodiment. The method is applied to a first communication node. The first communication node may be a network node (for example, a base station). As shown in FIG. 1, the method of this embodiment includes step 110 and step 120.

In step 110, first information and second information are determined.

In step 120, the first information is preprocessed, and the preprocessed first information is sent through a waveform based on a first modulation, where the second information is carried on symbols corresponding to the first modulation.

In this embodiment, during a low-power wake-up process, it is required to transmit information such as wake-up information and check information. Such information may be divided into two parts and sent through a first modulation waveform. The first modulation waveform may be binary on-off keying (OOK) combined with orthogonal frequency division multiplexing (OFDM). That is, an OFDM sequence is carried on an OOK symbol, namely, the sequence is carried at a first position of the OOK symbol. The first position represents a high-level position, or the first position represents a position at which a sequence is carried, or the first position represents a position at which transmission is performed.

In an embodiment, determining the first information and the second information includes:
determine a first length corresponding to the first information and a second length corresponding to the second information; and
dividing third information into the first information of the first length and the second information of the second length according to a predefined rule, where the third information includes at least one of wake-up information or cyclic redundancy check (CRC) information.

In an embodiment, determining the first length corresponding to the first information and the second length corresponding to the second information includes determining the first length and the second length according to at least one of the size of information carried on the symbols, the information carrying manner of the information carried on the symbols, or the length of third information.

The information carrying manner includes one of the following: all of the symbols carry same information; or the symbols are divided into multiple groups, where each group includes N symbols, symbols in the same group carry the same information, and symbols in different groups carry different information, where N is a positive integer greater than or equal to 1. Symbols in a group may be N consecutive symbols or may be N symbols determined according to a rule, where the value of N is preset or configured through signaling.

In an embodiment, the predefined rule includes at least one of the following:
the order of a bit sequence corresponding to the third information;
a time-domain position where the first information and the second information are sent;
a frequency-domain position where the first information and the second information are sent; or
the number of repetitions of the first information and the second information.

In an embodiment, determining the first information and the second information includes determining that the first information is wake-up information and the second information is CRC information.

In an embodiment, determining the first information and the second information includes in response to to-be-sent wake-up information including a group index corresponding to a to-be-woken-up terminal, determining that the first information includes at least high M1 bits of each of group indexes, and the second information includes at least low M2 bits of each of the group indexes, where M1 and M2 are each an integer greater than or equal to 0.

In an embodiment, determining the first information and the second information includes dividing to-be-sent wake-up information into two parts; and determining that the first information includes at least a first part of the wake-up information, and the second information includes at least a second part of the wake-up information.

In an embodiment, determining the first information and the second information include at least one of the following:
determining that the first information includes at least group wake-up information, and the second information includes at least subgroup wake-up information based on group wake-up;
determining, according to higher-layer signaling, that the first information includes at least group wake-up information, and the second information includes at least subgroup wake-up information based on groups;
determining that the first information includes at least a wake-up information type indication, and the second information includes at least a subgroup wake-up indication indicated by the first information or group wake-up information indicated by the first information;
determining that the first information includes at least group wake-up information corresponding to groups determined based on a first number of groups, and the second information includes at least group wake-up information corresponding to groups determined based on a second number of groups;
determining that the first information includes at least group wake-up information corresponding to groups determined according to a first grouping formula, and the second information includes at least group wake-up information corresponding to groups determined according to a second grouping formula;
determining that the first information includes at least wake-up information, and the second information includes at least cell index information;
determining that the first information includes at least wake-up information, and the second information includes at least terminal index information;
determining that the first information includes at least wake-up information, and the second information includes at least information carried on a paging early indication (PEI);
determining that the first information includes at least wake-up information, and the second information includes at least paging occasion (PO) information corresponding to the wake-up information, where the PO information includes at least one of a PO index or a number of POs;
determining that the first information comprises at least wake-up information, and the second information comprises at least a paging frame (PF) corresponding to the wake-up information; or
determining that the first information includes at least wake-up information, and the second information includes at least measurement indication information, where the measurement indication information includes at least one of a measurement mode indication or a measurement relaxation granularity.

In an embodiment, the first information is wake-up information, and the second information is determined according to signaling.

The signaling is configured as whether to transmit the second information.

The second information includes one of the following: subgroup wake-up information, first information, cell index information, terminal index information, PO information, PF, information carried on a PEI, or a number of groups corresponding to the second information.

In an embodiment, the first information also includes Z1-bit CRC information, and the second information also includes Z2-bit CRC information, where Z1 and Z2 are each an integer greater than or equal to 0.

In an embodiment, the method also includes determining a first sequence set according to the second information; and carrying sequences in the first sequence set on the symbols.

In an embodiment, carrying the sequences in the first sequence set on the symbols includes repeating all of the sequences in the first sequence set k1 times and sequentially carrying the repeated sequences on the symbols; or repeating each of the sequences in the first sequence set k2 times and sequentially carrying the repeated sequences on the symbols.

k1 and k2 are each an integer greater than or equal to 1.

FIG. 2 is a flowchart of an information receiving method according to an embodiment. As shown in FIG. 2, the method of this embodiment includes step 210 and step 220.

In step 210, first information and second information are received, where a waveform corresponding to the first information is a waveform based on a first modulation, and the second information is carried on symbols corresponding to the first modulation.

In step 220, it is determined, according to the first information and the second information, whether to perform data transmission.

In an embodiment, receiving the first information and the second information includes determine a first length corresponding to the first information and a second length corresponding to the second information; and determine the received first information and the received second information according to the first length and the second length.

In an embodiment, determining, according to the first information and the second information, whether to perform the data transmission includes concatenating the first information and the second information according to a predefined rule to obtain third information; and determining, according to the third information, whether to perform the data transmission. The third information includes at least one of wake-up information or cyclic redundancy check (CRC) information.

In an embodiment, determining the first length corresponding to the first information and the second length corresponding to the second information includes determining the first length and the second length according to at least one of the size of information carried on the symbols, the information carrying manner of the information carried on the symbols, or the length of third information.

The information carrying manner includes one of the following: all of the symbols carry the same information; or the symbols are divided into multiple groups, where each group includes N symbols, symbols in the same group carry the same information, and symbols in different groups carry different information, where N is a positive integer greater than or equal to 1.

In an embodiment, the predefined rule includes at least one of the following:
the order of a bit sequence corresponding to the third information;
a time-domain position where the first information and the second information are sent;
a frequency-domain position where the first information and the second information are sent; or
the number of repetitions of the first information and the second information.

In an embodiment, it is determined, according to the third information, whether to perform data transmission.

In an embodiment, the first information is wake-up information, and the second information is CRC information.

In an embodiment, in response to to-be-sent wake-up information including a group index corresponding to a to-be-woken-up terminal, the first information includes at least high M1 bits of each of group indexes, and the second information includes at least low M2 bits of each of the group indexes, where M1 and M2 are each an integer greater than or equal to 0.

In an embodiment, the first information includes at least a first part of wake-up information, and the second information includes at least a second part of the wake-up information.

In an embodiment, determining the first information and the second information include at least one of the following:
the first information includes at least group wake-up information, and the second information includes at least subgroup wake-up information based on group wake-up;
determining, according to higher-layer signaling, that the first information includes at least group wake-up information, and the second information includes at least subgroup wake-up information based on groups;
the first information includes at least a wake-up information type indication, and the second information includes at least a subgroup wake-up indication indicated by the first information or group wake-up information indicated by the first information;
the first information includes at least group wake-up information corresponding to groups determined based on a first number of groups, and the second information includes at least group wake-up information corresponding to groups determined based on a second number of groups;
the first information includes at least group wake-up information corresponding to groups determined according to a first grouping formula, and the second information includes at least group wake-up information corresponding to groups determined according to a second grouping formula;
the first information includes at least wake-up information, and the second information includes at least cell index information;
the first information includes at least wake-up information, and the second information includes at least terminal index information;
the first information includes at least wake-up information, and the second information includes at least information carried on a paging early indication (PEI);
the first information includes at least wake-up information, and the second information includes at least paging occasion (PO) information corresponding to the wake-up information, where the PO information includes at least one of a PO index or the number of POs;
the first information includes at least wake-up information, and the second information includes at least a paging frame (PF) corresponding to the wake-up information; or
the first information includes at least wake-up information, and the second information includes at least measurement indication information, where the measurement indication information includes at least one of a measurement mode indication or a measurement relaxation granularity.

In an embodiment, the first information is wake-up information, and the second information is determined according to signaling.

The signaling is configured as whether to transmit the second information.

The second information includes one of the following: subgroup wake-up information, first information, cell index information, terminal index information, PO information, PF, information carried on a PEI, or a number of groups corresponding to the second information.

In an embodiment, the first information also includes Z1-bit CRC information, and the second information also includes Z2-bit CRC information, where Z1 and Z2 are each an integer greater than or equal to 0.

In the following embodiments, by way of example, the first communication node is a base station, and the second communication node is a terminal.

### Embodiment one

The base station determines first information and second information, preprocesses the first information, and sends the preprocessed first information using on-off keying (OOK) modulation. The second information is carried, in the form of sequence, on OOK symbols.

In an embodiment, it is assumed that the wake-up information to be sent is 8-bit wake-up information 01010011, it is assumed that the CRC check sequence is 11011001, and it is assumed that the sequence set includes 4 sequences, that is, at most 2 bits of information can be carried on each OOK symbol. Table 1 lists the mapping relationship between information and sequences. It is assumed that all OOK symbols carry the same information.

**Table 1 Mapping relationship between information and sequences**

| Information | Sequence |
|---|---|
| 00 | 1 |
| 01 | 2 |
| 10 | 3 |
| 11 | 4 |

The base station determines, according to the information carrying manner of the information carried on the OOK symbols and the size of the information carried on the OOK symbols, that the length corresponding to the first information is 14 bits and the length corresponding to the second information is 2 bits. The base station concatenates 8-bit group wake-up information and CRC information and divides the concatenated information into the first information and the second information according to a predefined rule. In an example, the first information is the first 14 bits of the concatenated information, and the second information is the last 2 bits of the concatenated information. The base station preprocesses the first information using Manchester coding with a code rate of 1/2 (where 0 is encoded as 01 and 1 is encoded as 10) and sends the preprocessed first information using OOK modulation. Sequences selected according to the second information are carried on corresponding OOK symbols.

The terminal obtains the first information based on the first length of 14 bits and obtains the second information based on the second length of 2 bits, concatenates the first information and the second information to obtain 8-bit group wake-up information and CRC information, and, if the CRC check is passed, determines whether to start data transmission according to the corresponding wake-up information.

### Embodiment two

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol. It is assumed that different OOK symbols carry different information.

The base station determines, according to the information carrying manner of the information carried on the OOK symbols and the size of the information carried on the OOK symbols, that the length corresponding to the first information is 6 bits. Each OOK symbol carries 2 bits of information, and OOK modulation carries 1 bit of information; therefore, the length of the first information is obtained by dividing the length of all information to be sent by (2+1) and rounding up the result. The length of the second information is 10 bits. The base station concatenates 8-bit group wake-up information and 8-bit CRC information and divides the concatenated information into the first information and the second information according to a predefined rule. In an example, the first information is the first 6 bits 010100, and the second information is the last 10 bits 1111011011. The base station preprocesses the first information using Manchester coding with a code rate of 1/2 and sends the preprocessed first information using OOK modulation. In the second information, corresponding sequences are selected in units of 2 bits and carried on corresponding OOK symbols.

FIG. 3 is a diagram illustrating that second information is carried on symbols corresponding to a first modulation according to an embodiment. As shown in FIG. 3, since 10/2 = 5, sequences are carried on only five "1" symbols (assuming that the first position corresponds to a "1" symbol). The first five symbols may be selected to carry the sequences; or the last five symbols may be selected to carry the sequences; or the last symbol may repeat the first symbol or the second-to-last symbol, and so on.

In another example, since each OOK symbol carries 2 bits of information and OOK modulation carries 1 bit of information, the 16 bits are divided into six pairs in units of three bits. The first bits in these pairs constitute the first information. The remaining two bits in these pairs constitute the second information. That is, the bit sequence 0101001111011001 is divided into six pairs in units of three bits as 010, 100, 111, 101, 100, and 1. Accordingly, the first information is 011110, and the second information is 1000110100.

### Embodiment three

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol. It is assumed that OOK symbols are grouped by N OOK symbols per group (where the OOK symbols here refer to symbols corresponding to the first position). The same group carries the same information. Different groups carry different information. It is assumed that N = 2. The value of N may be fixed or configured through signaling. It is assumed that the first position corresponds to a "1" symbol.

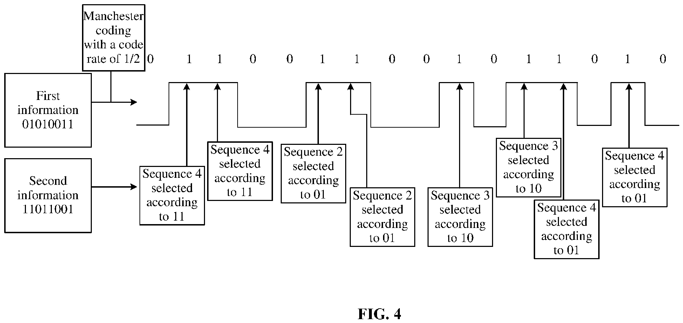

The base station determines, according to the information carrying manner of the information carried on the OOK symbols and the size of the information carried on the OOK symbols, that the length corresponding to the first information is 8 bits. Each two OOK symbols carry 2 bits of information, and OOK modulation carries 1 bit of information; therefore, the length of the first information is obtained by dividing the length of all information to be sent by (2+2)*2 and rounding up the result. The length of the second information is 8 bits. The base station concatenates 8-bit group wake-up information and 8-bit CRC information and divides the concatenated information into the first information and the second information according to a predefined rule. FIG. 4 is a diagram illustrating that second information is carried on symbols corresponding to a first modulation according to an embodiment. In an example, the first information is the first 8 bits 01010011, and the second information is the last 8 bits 11011011. The base station preprocesses the first information using Manchester coding with a code rate of 1/2 and sends the preprocessed first information using OOK modulation. In the second information, corresponding sequences are selected in units of 2 bits and carried on corresponding OOK symbols. Each two "1" symbols carry the same information.

### Embodiment four

It is assumed that the wake-up information to be sent is 9-bit wake-up information 010100111. The wake-up information corresponds to 3 group indexes to be woken up. It is assumed that the sequence set includes 4 sequences, that is, at most 2 bits of information can be carried on each OOK symbol. It is assumed that different OOK symbols carry different information.

The base station determines, according to the mapping manner of group wake-up, that the first information is high bits of each of group indexes and the second information is low bits of each of the group indexes, preprocesses the first information using Manchester coding with a code rate of 1/2, and sends the preprocessed first information using OOK modulation. Corresponding sequences are selected in units of two bits from the second information and carried on OOK symbols.

Since each OOK symbol can carry up to 2 bits of information, the low 2 bits of each of the group indexes are determined as the second information. Accordingly, the first information is 011, and the second information is 100011.

The terminal determines that the first information includes at least high 1 bit of each of the group indexes and the second information includes at least low 2 bits of each of the group indexes. Since the received first information is 011 and the received second information is 100011, the wake-up information 010100111 is obtained, and whether data transmission is performed is determined according to the wake-up information.

### Embodiment five

It is assumed that the wake-up information to be sent is 8-bit wake-up information 01010011. It is assumed that the sequence set includes 4 sequences. That is, at most 2 bits of information can be carried on each OOK symbol.

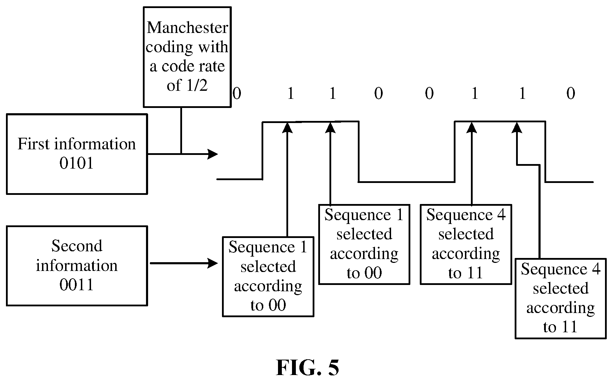

The wake-up information is divided into M groups. By way of example, M = 2. That is, 0101 forms a group, and 0011 forms a group. The base station determines that the first information is high 2 bits of each of group indexes and the second information is low 2 bits of each of the group indexes, preprocesses the first information 0100 using Manchester coding with a code rate of 1/2, and sends the preprocessed first information using OOK modulation. Corresponding sequences are selected in units of two bits from the second information and carried on OOK symbols. FIG. 5 is a diagram illustrating that second information is carried on symbols corresponding to a first modulation according to an embodiment. After encoding, the first information is 01100110. Sequence 1 selected according to 00 is carried on the first two "1" symbols. Sequence 4 selected according to 11 is carried on the last two "11" symbols.

The terminal determines that the first information includes at least a first part of the wake-up information and the second information includes at least a second part of the wake-up information. Since the received first information is 0101 and the received second information is 0011, the wake-up information 010100111 is obtained, and whether data transmission is performed is determined according to the wake-up information.

### Embodiment six

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol.

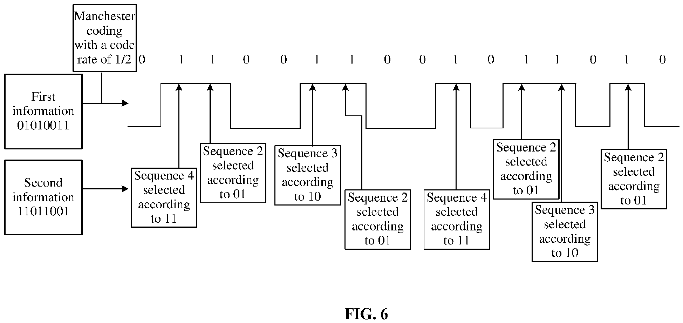

The base station determines, according to the information type, that the first information is wake-up information and the second information is CRC information, preprocesses the first information using Manchester coding with a code rate of 1/2, and sends the preprocessed first information using OOK modulation. Corresponding sequences are selected in units of two bits from the second information and carried on OOK symbols. FIG. 6 is a diagram illustrating that second information is carried on symbols corresponding to a first modulation according to an embodiment. Since the first information, after encoding, contains eight "1" symbols, the second information can be carried in a repeated manner. One repetition manner is to repeat after all the information has been mapped once. For example, as shown in the figure, the sequences 4, 2, 3, and 2 are mapped for the first time and then mapped once again. It is to be understood that the repetition manner shown in the figure is an example. Alternatively, a single sequence may be repeatedly mapped before traversing all sequences, for example, mapping the sequences in the order of sequence 4, sequence 4, sequence 2, sequence 2, sequence 3, sequence 3, sequence 2, and sequence 2 onto the "1" symbols.

The terminal determines that the first information is wake-up information and the second information is a CRC check. Since the received first information is 01010011 and the received second information is 11011001, the wake-up information 010100111 is obtained, and whether data transmission is performed is determined according to the wake-up information.

### Embodiment seven

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol. The following table lists the mapping relationship between information and sequences.

The base station determines that the first information is 4-bit wake-up information plus a 4-bit CRC check and the second information is 4-bit wake-up information plus a 4-bit CRC check. The base station preprocesses the first information using Manchester coding with a code rate of 1/2 and sends the preprocessed first information using OOK modulation. Corresponding sequences are selected in units of two bits from the second information and carried on OOK symbols.

In an example, the 4-bit wake-up information in the first information is the first 4 bits of the wake-up information, and the 4-bit wake-up information in the second information is the last 4 bits of the wake-up information.

In an example, the 4-bit wake-up information in the first information is the last 4 bits of the wake-up information, and the 4-bit wake-up information in the second information is the first 4 bits of the wake-up information.

In an example, the first information and the second information are determined according to a time-frequency position in which sending is performed.

The terminal determines that the first information is 4-bit wake-up information plus a 4-bit CRC check and the second information is 4-bit wake-up information plus a 4-bit CRC check and determines, according to the received first information and the received second information, whether to perform data transmission.

### Embodiment eight

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol.

The base station determines that the first information is 4-bit wake-up information plus an 8-bit CRC check and the second information is 4-bit wake-up information plus an 8-bit CRC check. The base station preprocesses the first information using Manchester coding with a code rate of 1/2 and sends the preprocessed first information using OOK modulation. Corresponding sequences are selected in units of two bits from the second information and carried on OOK symbols.

The terminal determines that the first information is 4-bit wake-up information plus an 8-bit CRC check and the second information is 4-bit wake-up information plus an 8-bit CRC check and determines, according to the received first information and the received second information, whether to perform data transmission.

### Embodiment nine

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol. It is assumed that, in the 8-bit group wake-up information, the first 6 bits are a group index determined according to a terminal index and the last 2 bits are a group index determined according to core network (CN) configuration.

The base station determines, according to the group index determination manner, that the first information is the first 6 bits of wake-up information plus an 8-bit CRC check and the second information is the last 2 bits of wake-up information plus an 8-bit CRC check. The base station preprocesses the first information using Manchester coding with a code rate of 1/2 and sends the preprocessed first information using OOK modulation. Corresponding sequences are selected in units of two bits from the second information and carried on OOK symbols.

The terminal determines that the first information is the first 6 bits of wake-up information plus an 8-bit CRC check and the second information is the last 2 bits of wake-up information plus an 8-bit CRC check and determines, according to the received first information and the received second information, whether to perform data transmission.

### Embodiment ten

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol. It is assumed that, in the 8-bit group wake-up information, the first 4 bits are a group index corresponding to a first type of terminal, and the last 4 bits are a group index corresponding to a second type of terminal.

The base station determines, according to the group index determination manner, that the first information is the first 4 bits of wake-up information plus an 8-bit CRC check and the second information is the last 4 bits of wake-up information plus an 8-bit CRC check. The base station preprocesses the first information using Manchester coding with a code rate of 1/2 and sends the preprocessed first information using OOK modulation. Corresponding sequences are selected in units of two bits from the second information and carried on OOK symbols.

The terminal determines that the first information is the first 4 bits of wake-up information plus an 8-bit CRC check and the second information is the last 4 bits of wake-up information plus an 8-bit CRC check and determines, according to the received first information and the received second information, whether to perform data transmission.

### Embodiment eleven

It is assumed that the wake-up information to be sent is 8-bit wake-up information 01010011. It is assumed that the CRC check sequence is 11011001. It is assumed that the sequence set includes 4 sequences. That is, at most 2 bits of information can be carried on each OOK symbol.

The base station determines that the first information is wake-up information plus a CRC check and the second information is wake-up information. The base station preprocesses the first information using Manchester coding with a code rate of 1/2 and sends the preprocessed first information using OOK modulation. Corresponding sequences are selected in units of two bits from the second information and carried on OOK symbols.

The terminal determines that the first information is wake-up information plus an 8-bit CRC check and the second information is wake-up information and determines, according to the received first information and the received second information, whether to perform data transmission.

### Embodiment twelve

It is assumed that the CRC check sequence is 11011001. It is assumed that the number of sequences in the sequence set is 16. That is, each OOK symbol can carry up to 4 bits of information.

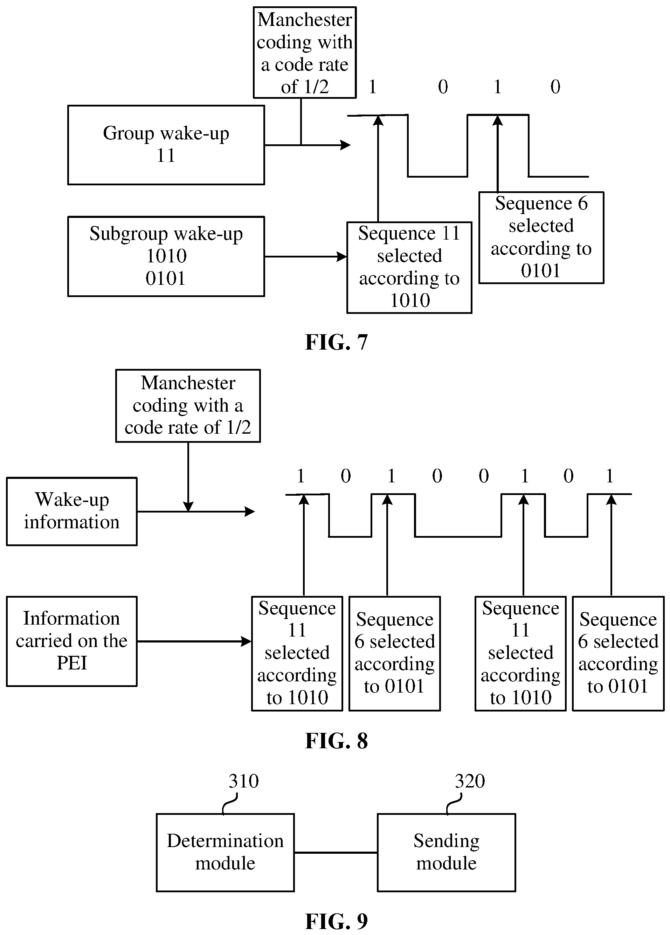

The base station determines that the first information is group wake-up information and the second information is group-wake-up-based subgroup wake-up. Since each OOK symbol can carry up to 4 bits of information, each group corresponds to at most four subgroups. Accordingly, the first information is group wake-up information plus an 8-bit CRC check, and the second information is 4-bit subgroup wake-up information. The base station preprocesses the first information using Manchester coding with a code rate of 1/2 and sends the preprocessed first information using OOK modulation. Corresponding sequences are selected in units of four bits from the second information and carried on OOK symbols. FIG. 7 is a diagram illustrating that second information is carried on symbols corresponding to a first modulation according to an embodiment. In an example, the two group wake-up values are 11, and the corresponding subgroup wake-up values are 1010 and 0101 respectively. The sending manner is shown in FIG. 7.

The terminal determines that the first information is group wake-up information and the second information is group-wake-up-based subgroup wake-up and determines, according to the received first information and the received second information, whether to perform data transmission.

### Embodiment thirteen

It is assumed that the CRC check sequence is 11011001. It is assumed that the number of sequences in the sequence set is 16. That is, each OOK symbol can carry up to 4 bits of information.

The base station determines, according to higher-layer signaling, that the first information is group-based wake-up information and a CRC check and the second information is a group-based subgroup wake-up indication and a CRC check. The base station preprocesses the first information using Manchester coding with a code rate of 1/2 and sends the preprocessed first information using OOK modulation. Corresponding sequences are selected in units of four bits from the second information and carried on OOK symbols.

The terminal determines that the first information is group wake-up information and a CRC check and the second information is group-wake-up-based subgroup wake-up and a CRC check and determines, according to the received first information and the received second information, whether to perform data transmission.

### Embodiment fourteen

It is assumed that the CRC check sequence is 11011001. It is assumed that the number of sequences in the sequence set is 4. That is, each OOK symbol can carry up to 4 bits of information.

The base station determines that the first information is a wake-up information type indication plus an 8-bit CRC check and the second information is group wake-up information or a subgroup wake-up indication indicated by the first information. The base station preprocesses the first information using Manchester coding with a code rate of 1/2 and sends the preprocessed first information using OOK modulation. Corresponding sequences are selected in units of four bits from the second information and carried on OOK symbols.

The terminal determines that the first information is a wake-up information type indication plus an 8-bit CRC check and the second information is group wake-up information or a subgroup wake-up indication indicated by the first information and determines, according to the received first information and the received second information, whether to perform data transmission.

### Embodiment fifteen

It is assumed that the CRC check sequence is 11011001. It is assumed that the number of sequences in the sequence set is 4. That is, each OOK symbol can carry up to 4 bits of information.

The base station determines that the first information is CRC information and group wake-up information determined according to the number of groups Q1 and the second information is CRC information and group wake-up information determined according to the number of groups Q2. Q1 and Q2 are each a positive integer greater than or equal to 1. Q1 and Q2 may be preset or may be indicated by signaling. The base station preprocesses the first information using Manchester coding with a code rate of 1/2 and sends the preprocessed first information using OOK modulation. Corresponding sequences are selected in units of four bits from the second information and carried on OOK symbols.

The terminal determines that the first information is CRC information and group wake-up information determined according to the number of groups Q1 and the second information is CRC information and group wake-up information determined according to the number of groups Q2 and determines, according to the received first information and the received second information, whether to perform data transmission.

### Embodiment sixteen

It is assumed that the CRC check sequence is 11011001. It is assumed that the number of sequences in the sequence set is 16. That is, each OOK symbol can carry up to 4 bits of information.

The base station determines that the first information is the first 4 bits of CRC information and group wake-up information determined according to the number of groups Q1 and the second information is the last 4 bits of CRC information and group wake-up information determined according to the number of groups Q2. Q1 and Q2 are each a positive integer greater than or equal to 1. Q1 and Q2 may be preset or may be indicated by signaling. The base station preprocesses the first information using Manchester coding with a code rate of 1/2 and sends the preprocessed first information using OOK modulation. Corresponding sequences are selected in units of four bits from the second information and carried on OOK symbols.

The terminal determines that the first information is the first 4 bits of CRC information and group wake-up information determined according to the number of groups Q1 and the second information is the last 4 bits of CRC information and group wake-up information determined according to the number of groups Q2 and determines, according to the received first information and the received second information, whether to perform data transmission.

### Embodiment seventeen

It is assumed that the number of sequences in the sequence set is 16, that is, each OOK symbol can carry up to 4 bits of information. It is assumed that the CRC sequence is 11011001.

The base station determines that the first information is an 8-bit CRC check plus group wake-up information determined according to a first grouping formula and the second information is an 8-bit CRC check plus group wake-up information determined according to a second grouping formula. The first grouping formula and the second grouping formula are preconfigured. In an example, the first grouping formula is mod(UE-ID, L) and the second grouping formula is mod(UE-ID/L, L). L denotes the number of groups. The base station preprocesses the first information using Manchester coding with a code rate of 1/2 and sends the preprocessed first information using OOK modulation. Corresponding sequences are selected in units of four bits from the second information and carried on OOK symbols.

The terminal determines that the first information is an 8-bit CRC check plus group wake-up information determined according to a first grouping formula and the second information is an 8-bit CRC check plus group wake-up information determined according to a second grouping formula and determines, according to the received first information and the received second information, whether to perform data transmission.

### Embodiment eighteen

It is assumed that the number of sequences in the sequence set is 16, that is, each OOK symbol can carry up to 4 bits of information.

The base station determines that the first information is group wake-up information determined according to a first grouping formula and the second information is group wake-up information determined according to a second grouping formula. The first grouping formula and the second grouping formula are preconfigured. In an example, the first grouping formula is mod(UE-ID, L) and the second grouping formula is mod(UE-ID/L, L). L denotes the number of groups. The base station preprocesses the first information using Manchester coding with a code rate of 1/2 and sends the preprocessed first information using OOK modulation. Corresponding sequences are selected in units of four bits from the second information and carried on OOK symbols.

The terminal determines that the first information is group wake-up information determined according to a first grouping formula and the second information is group wake-up information determined according to a second grouping formula and determines, according to the received first information and the received second information, whether to perform data transmission.

### Embodiment nineteen

It is assumed that the number of sequences in the sequence set is 2^M, that is, each OOK symbol can carry up to M bits of information.

The base station determines that the first information is wake-up information and the second information is cell index information. Since each OOK symbol can carry up to M bits of information, a sequence is selected according to the cell index modulo M and carried on the OOK symbol corresponding to the wake-up information. The symbols carry the same sequence.

The terminal determines that the first information is wake-up information and the second information is cell index information and determines, according to the received first information and the received second information, whether to perform data transmission.

### Embodiment twenty

It is assumed that the number of sequences in the sequence set is 2^M, that is, each OOK symbol can carry up to M bits of information.

The base station determines that the first information is wake-up information and the second information is terminal index information. Since each OOK symbol can carry up to M bits of information, a sequence is selected according to the terminal index modulo M and carried on the OOK symbol corresponding to the wake-up information. Each symbol carries index information of one terminal.

The terminal determines that the first information is wake-up information and the second information is terminal index information and determines, according to the received first information and the received second information, whether to perform data transmission.

### Embodiment twenty-one

It is assumed that the number of sequences in the sequence set is 2^M, that is, each OOK symbol can carry up to M bits of information.

The base station determines that the first information is wake-up information and the second information is information carried on a PEI. Since each OOK symbol can carry up to M bits of information, the wake-up information carried on the PEI is divided into 8/M units. A sequence is selected according to the value of each unit and carried on the OOK symbol corresponding to the wake-up information. FIG. 8 is a diagram illustrating that second information is carried on symbols corresponding to a first modulation according to an embodiment. It is assumed that the information carried on the PEI is 10100101, M = 4, and the wake-up information is 1100, as shown in FIG. 8.

The terminal determines that the first information is wake-up information and the second information is information carried on a PEI and determines, according to the received first information and the received second information, whether to perform data transmission.

### Embodiment twenty-two

It is assumed that the number of sequences in the sequence set is 2^M, that is, each OOK symbol can carry up to M bits of information.

The base station determines that the first information is wake-up information and the second information is PO information corresponding to the wake-up information. Since each OOK symbol can carry up to M bits of information, a sequence is selected according to the PO information modulo M and carried on the OOK symbol. The PO information includes one or more of a PO index and the number of POs.

The terminal determines that the first information is wake-up information and the second information is PO information corresponding to the wake-up information and determines, according to the received first information and the received second information, whether to perform data transmission.

### Embodiment twenty-three

It is assumed that the number of sequences in the sequence set is 2^M, that is, each OOK symbol can carry up to M bits of information.

The base station determines that the first information is wake-up information and the second information is a PF corresponding to the wake-up information. Since each OOK symbol can carry up to M bits of information, a sequence is selected according to the PF modulo M and carried on the OOK symbol.

The terminal determines that the first information is wake-up information and the second information is a PF corresponding to the wake-up information and determines, according to the received first information and the received second information, whether to perform data transmission.

### Embodiment twenty-four

The base station determines that the first information is wake-up information and the second information is measurement indication information. The measurement indication information includes at least one of the following: a measurement mode indication or a measurement relaxation granularity.

The terminal determines that the first information is wake-up information and the second information is measurement indication information and determines, according to the received first information and the received second information, whether to perform data transmission.

### Embodiment twenty-five

The base station determines that the first information is wake-up information and determines the second information according to signaling. Determining the second information according to signaling includes at least one of the following: configuring, through signaling, whether the second information is transmitted; or configuring, through signaling, that the second information includes one of the following: subgroup wake-up information, first information, cell index information, terminal index information, PO information, PF, information carried on a PEI, or the number of groups corresponding to the second information.

The terminal determines that the first information is wake-up information, determines the second information according to signaling, and determines, according to the received first information and the received second information, whether to perform data transmission.

Embodiments of the present application also provide an information sending apparatus. FIG. 9 is a diagram illustrating the structure of an information sending apparatus according to an embodiment. As shown in FIG. 9, the information sending apparatus includes a determination module 310 and a sending module 320.

The determination module 310 is configured to determine first information and second information.

The sending module 320 is configured to preprocess the first information and send the preprocessed first information through a waveform based on a first modulation, where the second information is carried on symbols corresponding to the first modulation.

In an embodiment, the determination module 310 is configured to determine a first length corresponding to the first information and a second length corresponding to the second information; and divide third information into the first information of the first length and the second information of the second length according to a predefined rule, where the third information includes at least one of wake-up information or cyclic redundancy check (CRC) information.

In an embodiment, determining the first length corresponding to the first information and the second length corresponding to the second information includes determining the first length and the second length according to at least one of the size of information carried on the symbols, the information carrying manner of the information carried on the symbols, or the length of third information.

The information carrying manner includes one of the following: all of the symbols carry same information; or the symbols are divided into multiple groups, where each group includes N symbols, symbols in the same group carry the same information, and symbols in different groups carry different information, where N is a positive integer greater than or equal to 1.

In an embodiment, the predefined rule includes at least one of the following:
the order of a bit sequence corresponding to the third information;
a time-domain position where the first information and the second information are sent;
a frequency-domain position where the first information and the second information are sent; or
the number of repetitions of the first information and the second information.

In an embodiment, the determination module 310 is configured to determine that the first information is wake-up information and the second information is CRC information.

In an embodiment, the determination module 310 is configured to in response to to-be-sent wake-up information including a group index corresponding to a to-be-woken-up terminal, determine that the first information includes at least high M1 bits of each of group indexes, and the second information includes at least low M2 bits of each of the group indexes, where M1 and M2 are each an integer greater than or equal to 0.

In an embodiment, the determination module 310 is configured to divide to-be-sent wake-up information into two parts; and determine that the first information includes at least a first part of the wake-up information, and the second information includes at least a second part of the wake-up information.

In an embodiment, the determination module 310 is configured to perform at least one of the following:
determining that the first information includes at least group wake-up information, and the second information includes at least subgroup wake-up information based on group wake-up;
determining, according to higher-layer signaling, that the first information includes at least group wake-up information, and the second information includes at least subgroup wake-up information based on groups;
determining that the first information includes at least a wake-up information type indication, and the second information includes at least a subgroup wake-up indication indicated by the first information or group wake-up information indicated by the first information;
determining that the first information includes at least group wake-up information corresponding to groups determined based on a first number of groups, and the second information includes at least group wake-up information corresponding to groups determined based on a second number of groups;
determining that the first information includes at least group wake-up information corresponding to groups determined according to a first grouping formula, and the second information includes at least group wake-up information corresponding to groups determined according to a second grouping formula;
determining that the first information includes at least wake-up information, and the second information includes at least cell index information;
determining that the first information includes at least wake-up information, and the second information includes at least terminal index information;
determining that the first information includes at least wake-up information, and the second information includes at least information carried on a paging early indication (PEI);
determining that the first information includes at least wake-up information, and the second information includes at least paging occasion (PO) information corresponding to the wake-up information, where the PO information includes at least one of a PO index or a number of POs;
determining that the first information includes at least wake-up information, and the second information includes at least a paging frame (PF) corresponding to the wake-up information; or
determining that the first information includes at least wake-up information, and the second information includes at least measurement indication information, where the measurement indication information includes at least one of a measurement mode indication or a measurement relaxation granularity.

In an embodiment, the first information is wake-up information, and the second information is determined according to signaling.

The signaling is configured as whether to transmit the second information.

The second information includes one of the following: subgroup wake-up information, first information, cell index information, terminal index information, PO information, PF, information carried on a PEI, or a number of groups corresponding to the second information.

In an embodiment, the first information also includes Z1-bit CRC information, and the second information also includes Z2-bit CRC information, where Z1 and Z2 are each an integer greater than or equal to 0.

In an embodiment, the apparatus also includes determining a first sequence set according to the second information; and carrying sequences in the first sequence set on the symbols.

In an embodiment, carrying the sequences in the first sequence set on the symbols includes repeating all of the sequences in the first sequence set k1 times and sequentially carrying the repeated sequences on the symbols; or repeating each of the sequences in the first sequence set k2 times and sequentially carrying the repeated sequences on the symbols.

k1 and k2 are each an integer greater than or equal to 1.

The information sending apparatus of this embodiment is based on the same inventive concept as the information sending method of any previous embodiment. For technical details not described in this embodiment, see any previous embodiment. This embodiment has the same beneficial effect as the performed information sending method.

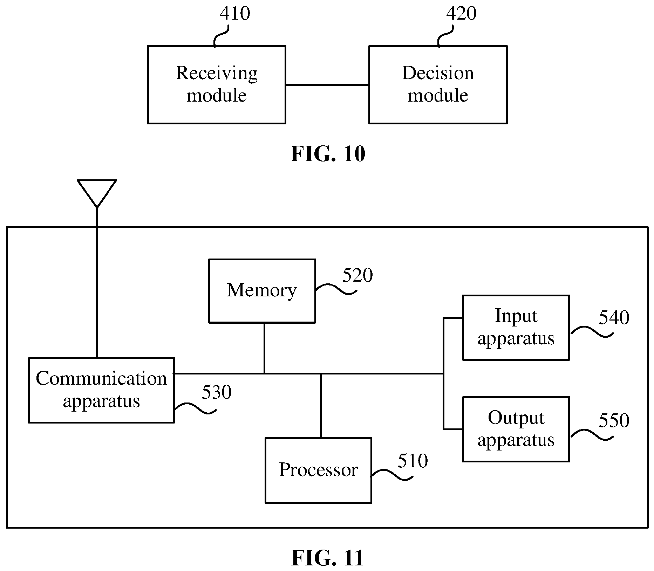

FIG. 10 is a diagram illustrating the structure of an information receiving apparatus according to an embodiment. As shown in FIG. 10, the information receiving apparatus includes a receiving module 410 and a decision module 420.

The receiving module 410 is configured to receive first information and second information, where a waveform corresponding to the first information is a waveform based on a first modulation, and the second information is carried on symbols corresponding to the first modulation.

The decision module 420 is configured to determine, according to the first information and the second information, whether to perform data transmission.

In an embodiment, the receiving module 410 is configured to determine a first length corresponding to the first information and a second length corresponding to the second information; and determine the received first information and the received second information according to the first length and the second length.

In an embodiment, the decision module 420 is configured to concatenate the first information and the second information according to a predefined rule to obtain third information; and determine, according to the third information, whether to perform the data transmission.

The third information includes at least one of wake-up information or cyclic redundancy check (CRC) information.

In an embodiment, the receiving module 410 is configured to determine the first length and the second length according to at least one of the size of information carried on the symbols, the information carrying manner of the information carried on the symbols, or the length of third information.

The information carrying manner includes one of the following: all of the symbols carry same information; or the symbols are divided into multiple groups, where each group includes N symbols, symbols in the same group carry the same information, and symbols in different groups carry different information, where N is a positive integer greater than or equal to 1.

In an embodiment, the predefined rule includes at least one of the following:
the order of a bit sequence corresponding to the third information;
a time-domain position where the first information and the second information are sent;
a frequency-domain position where the first information and the second information are sent; or
the number of repetitions of the first information and the second information.

In an embodiment, the first information is wake-up information, and the second information is CRC information.

In an embodiment, in response to to-be-sent wake-up information including a group index corresponding to a to-be-woken-up terminal, the first information includes at least high M1 bits of each of group indexes, and the second information includes at least low M2 bits of each of the group indexes, where M1 and M2 are each an integer greater than or equal to 0.

In an embodiment, to-be-sent wake-up information is divided into two parts. The first information includes at least a first part of the wake-up information, and the second information includes at least a second part of the wake-up information.

In an embodiment, the first information and the second information include at least one of the following:
the first information includes at least group wake-up information, and the second information includes at least subgroup wake-up information based on group wake-up;
according to higher-layer signaling, the first information includes at least group wake-up information, and the second information includes at least subgroup wake-up information based on groups;
the first information includes at least a wake-up information type indication, and the second information includes at least a subgroup wake-up indication indicated by the first information or group wake-up information indicated by the first information;
the first information includes at least group wake-up information corresponding to groups determined based on a first number of groups, and the second information includes at least group wake-up information corresponding to groups determined based on a second number of groups;
the first information includes at least group wake-up information corresponding to groups determined according to a first grouping formula, and the second information includes at least group wake-up information corresponding to groups determined according to a second grouping formula;
the first information includes at least wake-up information, and the second information includes at least cell index information;
the first information includes at least wake-up information, and the second information includes at least terminal index information;
the first information includes at least wake-up information, and the second information includes at least information carried on a paging early indication (PEI);
the first information includes at least wake-up information, and the second information includes at least paging occasion (PO) information corresponding to the wake-up information, where the PO information includes at least one of a PO index or the number of POs;
the first information includes at least wake-up information, and the second information includes at least a paging frame (PF) corresponding to the wake-up information; or
the first information includes at least wake-up information, and the second information includes at least measurement indication information, where the measurement indication information includes at least one of a measurement mode indication or a measurement relaxation granularity.

In an embodiment, the first information is wake-up information, and the second information is determined according to signaling.

The signaling is configured as whether to transmit the second information.

The second information includes one of the following: subgroup wake-up information, first information, cell index information, terminal index information, PO information, PF, information carried on a PEI, or a number of groups corresponding to the second information.

In an embodiment, the first information also includes Z1-bit CRC information, and the second information also includes Z2-bit CRC information, where Z1 and Z2 are each an integer greater than or equal to 0.

The information receiving apparatus of this embodiment and the information receiving method of any previous embodiment belong to the same inventive concept. For technical details not described in detail in this embodiment, see any previous embodiment. This embodiment has the same beneficial effects as the information receiving method performed.

Embodiments of the present application also provide a communication node. FIG. 11 is a diagram illustrating a hardware structure of a communication node according to an embodiment. As shown in FIG. 11, the communication node provided by the present application includes a processor 510 and a memory 520. One or more processors 510 may be provided in the communication node. In FIG. 11, one processor 510 is used as an example. The memory 520 is configured to store one or more programs. The one or more programs are executed by the one or more processors 510 to cause the one or more processors 510 to perform the information sending method or information receiving method provided in embodiments of the present application.

The communication node also includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is shown as an example in FIG. 11.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules such as program instructions/modules corresponding to the information sending method described in embodiments of the present application (for example, the determination module 310 and the sending module 320 in the information sending apparatus). The memory 520 may include a program storage region and a data storage region, where the program storage region may store an operating system and an application program required by at least one function, and the data storage region may store data and the like created according to the use of the communication node. Additionally, the memory 520 may include a high-speed random-access memory and may also include a nonvolatile memory such as at least one disk memory, a flash memory, or another nonvolatile solid-state memory. In some examples, the memory 520 may also include memories remote relative to the processor 510 and accessible to the communication node via a network. Examples of the network include, but are not limited to, the Internet, an intranet, a local area network, a mobile communication network, and a combination thereof.

Embodiments of the present application also provide a storage medium. The storage medium stores a computer program which, when executed by a processor, causes the processor to perform the information sending method of any embodiment of the present application. The information sending method includes determining first information and second information; and preprocessing the first information and sending the preprocessed first information through a waveform based on a first modulation, where the second information is carried on symbols corresponding to the first modulation. Alternatively, the storage medium stores a computer program which, when executed by a processor, causes the processor to perform the information receiving method of any embodiment of the present application. The information receiving method includes receiving first information and second information, where a waveform corresponding to the first information is a waveform based on a first modulation, and the second information is carried on symbols corresponding to the first modulation; and determining, according to the first information and the second information, whether to perform data transmission.

A computer storage medium according to an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium (a non-exhaustive list) include an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory, a magnetic memory, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. An information sending method, applied to a first communication node, comprising:
determining first information and second information; and
preprocessing the first information and sending the preprocessed first information through a waveform based on a first modulation, wherein the second information is carried on symbols corresponding to the first modulation.

2. The method of claim 1, wherein determining the first information and the second information comprises:
determining a first length corresponding to the first information and a second length corresponding to the second information; and
dividing third information into the first information of the first length and the second information of the second length according to a predefined rule, wherein the third information comprises at least one of wake-up information or cyclic redundancy check (CRC) information.

3. The method of claim 2, wherein determining the first length corresponding to the first information and the second length corresponding to the second information comprises:
determining the first length and the second length according to at least one of a size of information carried on the symbols, an information carrying manner of the information carried on the symbols, or a length of the third information;
wherein the information carrying manner comprises one of the following:
all of the symbols carry same information; or
the symbols are divided into a plurality of groups, wherein each group comprises N symbols, symbols in a same group carry same information, and symbols in different groups carry different information, wherein N is a positive integer greater than or equal to 1.

4. The method of claim 2, wherein the predefined rule comprises at least one of the following:
an order of a bit sequence corresponding to the third information;
a time-domain position where the first information and the second information are sent;
a frequency-domain position where the first information and the second information are sent; or
a number of repetitions of the first information and the second information.

5. The method of claim 1, wherein determining the first information and the second information comprises:
determining that the first information is wake-up information and the second information is CRC information.

6. The method of claim 1, wherein determining the first information and the second information comprises:
in response to to-be-sent wake-up information comprising a group index corresponding to a to-be-woken-up terminal, determining that the first information comprises at least M1 high bits of each of group indexes, and the second information comprises at least M2 low bits of each of the group indexes, wherein M1 and M2 are each an integer greater than or equal to 0.

7. The method of claim 1, wherein determining the first information and the second information comprises:
dividing to-be-sent wake-up information into two parts; and
determining that the first information comprises at least a first part of the wake-up information, and the second information comprises at least a second part of the wake-up information.

8. The method of claim 1, wherein determining the first information and the second information comprises at least one of the following:
determining that the first information comprises at least group wake-up information, and the second information comprises at least subgroup wake-up information based on group wake-up;
determining, according to higher-layer signaling, that the first information comprises at least group wake-up information, and the second information comprises at least subgroup wake-up information based on groups;
determining that the first information comprises at least a wake-up information type indication, and the second information comprises at least a subgroup wake-up indication indicated by the first information or group wake-up information indicated by the first information;
determining that the first information comprises at least group wake-up information corresponding to groups determined based on a first number of groups, and the second information comprises at least group wake-up information corresponding to groups determined based on a second number of groups;
determining that the first information comprises at least group wake-up information corresponding to groups determined according to a first grouping formula, and the second information comprises at least group wake-up information corresponding to groups determined according to a second grouping formula;
determining that the first information comprises at least wake-up information, and the second information comprises at least cell index information;
determining that the first information comprises at least wake-up information, and the second information comprises at least terminal index information;
determining that the first information comprises at least wake-up information, and the second information comprises at least information carried on a paging early indication (PEI);
determining that the first information comprises at least wake-up information, and the second information comprises at least paging occasion (PO) information corresponding to the wake-up information, wherein the PO information comprises at least one of a PO index or a number of POs;
determining that the first information comprises at least wake-up information, and the second information comprises at least a paging frame (PF) corresponding to the wake-up information; or
determining that the first information comprises at least wake-up information, and the second information comprises at least measurement indication information, wherein the measurement indication information comprises at least one of a measurement mode indication or a measurement relaxation granularity.

9. The method of claim 1, wherein
the first information is wake-up information, and the second information is determined according to signaling;
wherein the signaling is configured as whether to transmit the second information; and
wherein the second information comprises one of the following: subgroup wake-up information, first information, cell index information, terminal index information, PO information, PF, information carried on a PEI, or a number of groups corresponding to the second information.

10. The method of any one of claims 6 to 9, wherein the first information further comprises Z1-bit CRC information, and the second information further comprises Z2-bit CRC information, wherein Z1 and Z2 are each an integer greater than or equal to 0.

11. The method of claim 1, further comprising:
determining a first sequence set according to the second information; and
carrying sequences in the first sequence set on the symbols.

12. The method of claim 11, wherein carrying the sequences in the first sequence set on the symbols comprises:
repeating all of the sequences in the first sequence set k1 times and sequentially carrying the repeated sequences on the symbols; or
repeating each of the sequences in the first sequence set k2 times and sequentially carrying the repeated sequences on the symbols;
wherein k1 and k2 are each an integer greater than or equal to 1.

13. An information receiving method, applied to a second communication node, comprising:
receiving first information and second information, wherein a waveform corresponding to the first information is a waveform based on a first modulation, and the second information is carried on symbols corresponding to the first modulation; and
determining, according to the first information and the second information, whether to perform data transmission.

14. The method of claim 13, wherein receiving the first information and the second information comprises:
determining a first length corresponding to the first information and a second length corresponding to the second information; and
determining the received first information and the received second information according to the first length and the second length.

15. The method of claim 13 or 14, wherein determining, according to the first information and the second information, whether to perform the data transmission comprises:
concatenating the first information and the second information according to a predefined rule to obtain third information; and
determining, according to the third information, whether to perform the data transmission;
wherein the third information comprises at least one of wake-up information or cyclic redundancy check (CRC) information.

16. The method of claim 14, wherein determining the first length corresponding to the first information and the second length corresponding to the second information comprises:
determining the first length and the second length according to at least one of a size of information carried on the symbols, an information carrying manner of the information carried on the symbols, or a length of third information;
wherein the information carrying manner comprises one of the following:
all of the symbols carry same information; or
the symbols are divided into a plurality of groups, wherein each group comprises N symbols, symbols in a same group carry same information, and symbols in different groups carry different information, wherein N is a positive integer greater than or equal to 1.

17. The method of claim 15, wherein the predefined rule comprises at least one of the following:
the first information precedes the second information;
the first information follows the second information;
a time-domain position where the first information and the second information are received;
a frequency-domain position where the first information and the second information are received; or
a number of repetitions of the first information and the second information.

18. The method of claim 13, wherein receiving the first information and the second information comprises:
determining that the first information is wake-up information and the second information is CRC information.

19. The method of claim 13, wherein receiving the first information and the second information comprises:
in response to to-be-sent wake-up information comprising a group index corresponding to a to-be-woken-up terminal, determining that the first information comprises at least high M1 bits of each of group indexes, and the second information comprises at least low M2 bits of each of the group indexes, wherein M1 and M2 are each an integer greater than or equal to 0.

20. The method of claim 13, wherein receiving the first information and the second information comprises:
determining that the first information comprises at least a first part of wake-up information, and the second information comprises at least a second part of the wake-up information.

21. The method of claim 13, wherein receiving the first information and the second information comprises at least one of the following:
determining that the first information comprises at least group wake-up information, and the second information comprises at least subgroup wake-up information based on group wake-up;
determining, according to higher-layer signaling, that the first information comprises at least group wake-up information, and the second information comprises at least subgroup wake-up information based on groups;
determining that the first information comprises at least a wake-up information type indication, and the second information comprises at least a subgroup wake-up indication indicated by the first information or group wake-up information indicated by the first information;
determining that the first information comprises at least group wake-up information corresponding to groups determined based on a first number of groups, and the second information comprises at least group wake-up information corresponding to groups determined based on a second number of groups;
determining that the first information comprises at least group wake-up information corresponding to groups determined according to a first grouping formula, and the second information comprises at least group wake-up information corresponding to groups determined according to a second grouping formula;
determining that the first information comprises at least wake-up information, and the second information comprises at least cell index information;
determining that the first information comprises at least wake-up information, and the second information comprises at least terminal index information;
determining that the first information comprises at least wake-up information, and the second information comprises at least information carried on a paging early indication (PEI);
determining that the first information comprises at least wake-up information, and the second information comprises at least paging occasion (PO) information corresponding to the wake-up information, wherein the PO information comprises at least one of a PO index or a number of POs;
determining that the first information comprises at least wake-up information, and the second information comprises at least a paging frame (PF) corresponding to the wake-up information; or
determining that the first information comprises at least wake-up information, and the second information comprises at least measurement indication information, wherein the measurement indication information comprises at least one of a measurement mode indication or a measurement relaxation granularity.

22. The method of claim 13, wherein
the first information is wake-up information, and the second information is determined according to signaling;
wherein the signaling is configured as whether to transmit the second information; and
wherein the second information comprises one of the following: subgroup wake-up information, first information, cell index information, terminal index information, PO information, PF, information carried on a PEI, or a number of groups corresponding to the second information.

23. The method of any one of claims 19 to 22, wherein the first information further comprises Z1-bit CRC information, and the second information further comprises Z2-bit CRC information, wherein Z1 and Z2 are each an integer greater than or equal to 0.

24. A communication node, comprising a memory and at least one processor, wherein
the memory is configured to store at least one program; and
when executed by the at least one processor, the at least one program causes the at least one processor to perform the information sending method of any one of claims 1 to 12 or the information receiving method of any one of claims 13 to 23.

25. A computer-readable storage medium storing a computer program which, when executed by a processor, causes the processor to perform the information sending method of any one of claims 1 to 12 or the information receiving method of any one of claims 13 to 23.
